# EUROPÄISCHE PATENTANMELDUNG

(11) **EP 2 518 918 A1**
(43) Veröffentlichungstag der Anmeldung: **31.10.2012**
(21) Anmeldenummer: 11740079.6
(22) Anmeldetag: 26.01.2011
(51) Int. Cl.: H04H 60/85, H04W 4/12

(54) **VERFAHREN ZUR BEREITSTELLUNG VON INFORMATIONEN DURCH MOBILKOMMUNIKATION**

(30) Priorität: 25.12.2009 KZ 20091714
(71) Anmelder: Zhaksylykov, Kayrat Khayrullovich, Almaty 050000 (KZ)
(72) Erfinder: Zhaksylykov, Kayrat Khayrullovich, Almaty 050000 (KZ)
(74) Vertreter: Jeck, Anton
(86) Internationale Anmeldenummer: PCT/KZ2011/000002
(87) Internationale Veröffentlichungsnummer: WO 2011/096783

(57) **Zusammenfassung**

Die Erfindung betrifft den Bereich der Telekommunikation. Der Benutzer schickt eine Anfrage von seinem Mobilfunkgerät ab. Die Anfrage kann einen Code oder ein Stichwort enthalten, wonach die Suche nach der angefragten Information durchgeführt wird. Die Informationsanfrage kann auf einem Papierträger niedergelegt werden. Die gefundene Information wird an das Mobilfunkgerät des Benutzers gesendet. Der Benutzer kann die Information entweder einmalig oder ab und zu je nach der Aktualisierung der Informationen bekommen. Damit werden die Zugänglichkeit, die Schnelligkeit und der einfache Ablauf bei der Informationsgewinnung sichergestellt. Der Einsatz dieser Erfindung ermöglicht es, verschiedene Aufgaben schneller zu erledigen. Die unzeitgemäße Lieferung der Meldungen an den Teilnehmer kann dazu führen, dass die Information nicht mehr aktuell ist.

## Beschreibung

Die Erfindung betrifft ein Verfahren zur Bereitstellung von Daten mittels Mobilfunks nach dem Oberbegriff des Anspruchs 1.

Die Erfindung ist im Bereich der Telekommunikation einsetzbar.

Aus dem Stand der Technik ist ein Verfahren der Verwendung von Mobilfunkkanälen zur Übertragung von Daten innerhalb eines Fernunterrichtssystems (Teleunterrichtssystems) bekannt (U 200702773 A, 15. März 2007).

Der bekannte Gegenstand kann für andere Benutzer-Kategorien nicht angewendet werden.

Es ist Aufgabe der Erfindung, ein einfaches und schnell wirkendes Verfahren zur Beschaffung von erforderlichen Informationen zu entwickeln. Werden die Meldungen dem Teilnehmer nicht zeitgemäß mitgeteilt, so kann die Information veraltet, also nicht mehr aktuell sein.

Die gestellte Aufgabe wird durch die Merkmale des Anspruchs 1 gelöst.

Das technische Ergebnis ist eine einfache Ausführbarkeit des Verfahrens zur Gewinnung der erforderlichen Informationen. Dabei wird die erforderliche Information an das Mobilfunkgerät der zu informierenden Seite gesendet.

Vorteilhafte Weiterbildungen des Verfahrens sind den Unteransprüchen entnehmbar.

Das vorgeschlagene Verfahren wird folgenderweise durchgeführt.

Die zu informierende Seite sendet eine Anfrage vom Mobilfunkgerät aus. Die Anfrage kann dabei einen Code oder ein Stichwort enthalten, anhand dessen die Suche nach den erforderlichen Informationen vorgenommen wird. Die Information kann auch auf einem Papierträger angefragt werden. Die ermittelten Daten werden dann an das Mobilfunkgerät der zu informierenden Seite zurückgesendet. Die Suchergebnisse können entweder einmalig oder ab und zu je nach der Aktualisierung der gefundenen Daten gesendet werden.

Die gesuchte Information betrifft eine Liste von Dokumenten, die zur standesamtlichen Eheschließung erforderlich sind. Die entsprechende Kurzmeldung "Liste von Dokumenten zur standesamtlichen Eheschließung" wird vom Mobilfunkgerät abgeschickt. Nach der Bearbeitung dieser Anfrage sendet der Informationsanbieter die angefragte Liste ebenfalls in Form einer Kurzmeldung der zu informierenden Seite zu.

## Patentansprüche

1. Verfahren zur Bereitstellung von Daten mittels Mobilfunks, wobei der zu informierenden Seite die Art der erforderlichen Information mitgeteilt wird,
**dadurch gekennzeichnet,**
**dass** die erforderliche Information an das Mobilfunkgerät der zu informierenden Seite gesendet wird.

2. Verfahren nach Anspruch 1,
**dadurch gekennzeichnet,**
**dass** die Art der erforderlichen Information mittels eines Mobilfunkgeräts mitgeteilt wird, indem ein Code oder ein Stichwort gesendet wird.

3. Verfahren nach Anspruch 1,
**dadurch gekennzeichnet,**
**dass** die Art der erforderlichen Information mittels ihrer Darlegung auf einem Papierträger mitgeteilt wird.

4. Verfahren nach Anspruch 1,
**dadurch gekennzeichnet,**
**dass** die erforderliche Information an das Mobilfunkgerät der zu informierenden Seite einmal gesendet wird.

5. Verfahren nach Anspruch 1,
**dadurch gekennzeichnet,**
**dass** die erforderliche Information an das Mobilfunkgerät der zu informierenden Seite ab und zu je nach Aktualisierung der Information gesendet wird.
